# EUROPEAN PATENT SPECIFICATION

(11) **EP 2 175 002 B1**
(45) Date of publication and mention of the grant of the patent: **09.11.2011**
(21) Application number: 09172583.8
(22) Date of filing: 08.10.2009
(51) Int. Cl.: C09K 3/14, B24D 3/00

(54) **Abrasive composition in particular for the manufacturing of abrasive wheels**
Schleifzusammensetzung insbesondere zur Herstellung von Schleifscheiben
Composition abrasive, en particulier pour la fabrication de meules

(30) Priority: 08.10.2008 IT RM20080537
(43) Date of publication of application: 14.04.2010
(73) Proprietor: Eraclit-Venier S.p.A., 30175 Venezia (VE) (IT)
(72) Inventor: Franco, Leonardo, 30171 Venezia (VE) (IT)
(74) Representative: Locas, Davide

(56) References cited:
- US-A- 2 955 031
- US-A- 3 262 766
- US-A- 4 761 163
- US-A1- 2005 239 381

## Description

The present invention refers to an abrasive composition, in particular for the manufacturing of abrasive wheels.

In several industrial fields abrasive powders and pastes are widely used for the tooling, e.g. by means of grinding wheels, of various products, in particular made of metallic materials.

Several compositions for such powders and pastes are known, using as abrasive components, oxides of various elements used in form of powder and dispersed in a liquid or in a gel. An example of such oxides is represented by magnesium oxide which, in particular, allows to obtain an abrasive product which is not excessively expensive, and at the same time ecologic both in the manufacturing step and in the disposal step.

The magnesium oxide, eventually together with other oxides and salts, such as titanium oxides, cobalt oxides, is then used in aqueous or gel-based compositions.

An example of such compositions is provided by the Japan patent application JP 2001 288456, wherein an abrasive composition comprising from 0.1 to 50 % in weight of an abrasive among silicone, aluminium, cerium, zirconium, titanium, magnesium oxides, from 0.001 to 10 % in weight of salts such as potassium, sodium, or lithium periodate and water is described. Nevertheless, in general all the above mentioned components are not always and not everywhere easily available and accordingly, as an alternative, in the European patent application EP 411 413, or in US 4,761,163 the use for abrasive compositions of other combinations of oxides and salts is described, among which, in particular, the use of magnesium oxide together with a magnesium chloride.

Such combination thus allows to obtain an abrasive composition sufficiently easily with products being reasonably expensive and, generally, easily available.

Nevertheless, a similar composition do not guarantee enough productivity, meant as the number of pieces manufactured the oxide used being the same comparing to the other abrasive pastes. In fact, the manufacture of abrasive wheels normally takes place by means of the casting of a mixture in a mould, determining the volume of the grinding wheel manufactured. Thus, the amount of oxide being the same, the higher the amount of liquid that it is possible to add to the composition, the higher will be the volume of the mixture. As a consequence, by increasing the volume by means of using more solution, a higher number of final pieces would be obtained, the amount of oxide used being the same.

In fact, it should be understood that the costs of such composition basically derives from the amount of oxide used in the same and, a composition requiring less oxide, the abrasive power, thus the productivity, being the same, is more cost effective.

Another example of abrasive composition is described in US 2,955,031 A, describing an example of composition based on a mixture of zirconium oxide and zinc oxide.

Nevertheless, such composition is not suitable for the manufacturing of abrasive tools by means of casting but, on the contrary, it is used as an abrasive paste, since it does not harden after pouring in a mould.

Hence, the technical problem underlying the present invention is to provide an abrasive composition allowing to overcome the drawbacks mentioned above with reference to the known art.

Such problem is solved by the abrasive composition, the method, the tool and the kit according to appended claims.

The present invention provides several relevant advantages. The main advantage lies in that allows to obtain an high productivity although being cost effective, an appropriate abrasive power and optimal ecologic features both in the manufacturing step and during disposal.

Other advantages, features and the operation modes of the present invention will be made apparent from the following detailed description of some embodiments thereof, given by way of a non-limiting example.

According to a preferred embodiment, the abrasive composition according to the present invention is obtained by mixing a powdered part and a liquid part. The powdered part, with the exclusion of the real inert abrasive, comprises magnesium oxide in an amount comprised between 99.0 % and 99.99 % of the total weight of the powdered part. Such magnesium oxide, once it has been grinded and it is therefore ready for being used in the composition according to the present invention, preferably has the following chemical-physical features:
- Titre:
MgO=82 - 92%
CaO < 2.5%
R₂O₃ (various oxides) < 0.6%
Insoluble residue : < 10%
Loss on ignition (1000 °C) < 3%
International Activity (citric acid method) = from 20 to 500 seconds

- Granulometry:

| | |
|---|---|
| Grains retained by sieves: | 106 micron < 1% |
| | 63 micron < 16 % |

Compacted specific weight: < 1.07 kg/l

The International Activity values, which incidentally provides a measurement of the material reactivity, have been obtained according to the citric acid method and, such measurement can be performed as specified in the following.

In general, the aggressiveness of an average strong acid solution on an examined material can be sensed as a reactivity index of the material itself.

It is reminded that the material reactivity is not normally evaluated basing on empirical parameters, since for complex mixtures or for impure materials, an absolute measurement of the material to be industrially used would be excessively complex.

More precisely the definitions "activity or reactivity according to the international method" or "International Activity" refers to the time measurement (in seconds) required for the powdered calcined magnesite to reacts (at a given temperature, e.g. 30 °C) with a specific medium strong acid solution, so that the solution pH value reaches the value at which a specific indicator (e.g. phenolphthalein) changes color. An example of this method is described in Kirk-Othmer Encyclopaedia of Chemical Technology - page 405.

It is important to emphasize that the reactivity of a powdered calcined magnesite is also influenced by the available active surface, due to the granulometric distribution and to the porosity of the product and thus the set of such parameters will allow to define the features of the magnesite used in the composition according to the present invention.

During the International Activity test, it is appropriate to use only reagent having a proven analytic quality and distilled water and, in particular: monohydrate citric acid (titre ≥ 99.8 %) ; (H₃C₆H₅O₇ · H₂O);
sodium benzoate (titre ≥ 99 %) ; (C₆H₅COONa);
1% phenolphthalein hydroalcoholic solution;
acid citric solution 0.4 N.

The test is performed by dissolving 2.5 ± 0,01 g of sodium benzoate and 280 ± 0.01 g of monohydrate citric acid in distilled water in 2 l flask (class A) and stirring until completely dissolved.

Next, the phenolphthalein solution (20 ml) is added until the total content is equal to 2 1.

The content is then transferred to a 10 l dark glass container and it is further diluted measuring the volumes with the 2 l flask (this operation is repeated 4 times).

Then, a standardization and a correction of the acid citric solution 0.4 N is provided.

In addition to the above listed elements, also the following reagents are used for the standardization:
sodium hydroxide (NaOH) 1 N- that will be preserved in a firmly closed polyethylene bottle.

Then, the standardization takes place placing 100 ml of acid citric solution, which are measured with a 50 ml pipette (class A) in a 250 ml glass and titrating with a NaOH solution I N by a 50 ml burette (class A) and keeping the glass with a stirring bar on a magnetic stirrer, until the colour change of the phenolphthalein towards pale pink. It should be noted that the required amount of NaOH 1 N is about 40 ml.

With reference to the acid citric solution correction, for each 0.1 ml of NaOH 1N added to the 40 ml scheduled, 25 ml of distilled water should be added to the 10 l of acid citric solution.

On the contrary, for each 0.1 ml of NaOH 1N used less than the 40 ml scheduled, 0.70 g of monohydrate citric acid will be added to the 10 l of acid citric solution.

It should be noted that, in the test performed, the volumetric glassware used has an analytic accuracy, i.e. class A and, in the description of the measuring process, the use of the letter (A) next to the volumetric measure indicates that class A glassware has been used.

The glassware should also be accurately washed and dried.

Moreover, the instrumentation has the following features:
balance tared with reading precision 0.0001 g and tolerance ± 0.0005 g;
balance tared with reading precision 0.01 g and tolerance 0.05 g;
thermostatic cup for water at 30 °C to be placed on the stirrer;
magnetic stirrer provided with stirring bars covered with PTFE Ø 6 mm and length 3 cm;
thermometers 0 ÷ 50 °C at least divided in 0.5 °C, one of the thermometers being inserted in rubber cup per flask (in order to allow the reading at 30 °C);
chronometer with 1 second precision;
weighting spatula and paper;
spoon.

It is also advisable to use powdered calcined magnesite having a known activity as a reference sample.

The material will be suitable preserved in hermetic containers that can be identified with a label having references regarding the type, date and features.

The adjusting of the magnetic stirring bar revolutions is required if the deviation between activity value is not comprised in the tolerated repeatability statistic error of ± 3 seconds, after tests on the latest two samples.

The test method starts with preparing the sample which is taken and identified and placed in a dry and clean container with hermetic closure. The sample is the homogenized by energetically stirring the container and if required by using the spoon for dispersing incidental big agglomerations (delicately operating for avoiding the alteration of the grain size).

Then, the measuring of the International Activity requires to measure with a 50 ml pipette (A) 100 ml of acid citric solution 0.4 N and to pour it in a 250 ml flask.

Then the magnetic stirring bar is placed in the flask and the latter is closed with the rubber cup with the thermometer inserted, placed so as to be drowning in the liquid, without touching the stirring bar.

In the following, the solution is heated to 30 °C placing the flask in the thermostatic cup with water at 30 °C disposed on the plate of a magnetic stirrer.

Once the temperature of 30 °C is reached in the flask, 2 ± 0.0010 g of magnesite under test are introduced with a single quick move, avoiding the adhesion of grains on the flask walls. Such operation and the next are performed in a thermostatic room but without keeping the flask in water so as not to distort the kinetic, which is function of the increasing of temperature caused by the exothermic features of the reaction.

The flask is the placed on the stirrer, and isolated from a direct contact with the metallic plate.

In order to perform the measuring the chronometer and the magnet revolution are simultaneously operated, the revolution being incidentally strong enough for obtaining an energetic stirring.

The time in seconds required in order for the phenolphthalein in the solution to make the colour of the suspension appear pale pink, that could be recorded by the chronometer in seconds, therefore provided the measuring of the International Activity.

Then, the composition according to the present invention, in addition to the magnesium oxide, uses rheological additives in a amount comprised between about 0.01 % and the 1.00 % of the total weight of the powdered part.

Such rheological additives are normally used in several building materials in order to modify their applicatory and viscosity properties. In fact, it has been noticed that the use of small amounts of some rheological additives, in combination with the above mentioned magnesium oxide, allows a relevant increase in the productivity during the use of the composition.

In particular, it has been noticed that the addition of a amount within the above mentioned range of organically modified Hectorites, e.g. Bentone® or Benaqua® types, both manufactured by Elementis Specialties, among which the preferred one is BENTONE® LT, or poly-electrolyte synthetic co-polymers, e.g. of Starvis type, manufactured by BASF Construction Polymers, among which the preferred is STARVIS 3003 F, could provided an increase of productivity comprised between 5 and 15%, when mixed with a solution of magnesium chloride which, accordingly will be the liquid part of the composition according the present invention.

Also cellulose ethers and the polysaccharides has similar properties to the above mentioned additives, but the rheology of the mixtures formed by adding them to the magnesium oxide, to which the appropriate amount of magnesium chloride and abrasive aggregates has been also added, featured on the one hand low productivity for a low amount of additives, on the other hand, for higher amounts, a tendency of absorbing air and an increased loss of flowability for the mixtures which, although high yields were expected, formed grinding wheels (finished pieces) with the higher number of defects. In deeper detail, the organically modified Hectorites, e.g. the above mentioned Bentone® or Benaqua® type, are minerals obtained by a manufacturing process which is capable of suitably combining the gelling features typical of the hectorites with an higher compatibility and effectiveness in mixed systems or containing organic products.

It is important to notice that such minerals are normally used in the tiles adhesives in the building field, since they form a stronger inner structure, allowing to prevent the tearing or, as an alternative, in cosmetics, e.g. face masks and hair products.

On the contrary, the poly-electrolyte synthetic co-polymers consists of synthesis polymers and are mainly used in cementitious, or non-cementitious products, which are fluid or highly thin, such as mortar or self-levelling screeds for controlling the aggregates sedimentation.

The mixing procedure between the above mentioned rheological additives and the magnesium oxide takes place using an appropriate mixer for powdered products, which is capable of assuring that at the end of the mixing process and of the packing in the selling packaging the required amount of additives is present, and that this amount is constant for all the sold packaging.

In any case, it should be noted that the rheological additives could be used in a similar way also on other oxides known in the art, as abrasive powders. As previously suggested, examples of such oxides are represented by silica, aluminium, cerium, zirconium oxides or by corundum and silicon carbides. Therefore, the abrasive composition according to present invention allows to increase the ratio between powdered and the liquid parts used during the manufacturing of the abrasive elements, in particular abrasive wheels, without compromising the abrasive properties of the final compound thereof. In practice, the composition so obtained, although using a higher amount of liquid part than the known products, maintains a high viscosity and, advantageously, allows to increase the overall productivity of the composition.

According to a preferred embodiment, the liquid part is formed by a solution of magnesium chloride or magnesium chloride/sulphate allowing, accordingly, to obtain a composition having completely ecological features. It should be understood that the liquid part will be added in order to obtain a composition which is sufficiently liquid for performing the manufacturing of products according to the desired modality. The final viscosity and as a consequence the maximum amount of liquid part usable, will be thus determined according to the appliance and a skilled person will be capable, in case by means of empirical tests, to determine the optimal amount of liquid part. It should be anyhow understood that, in order to increase the productivity of the composition, it is desirable to use the more liquid part possible, without compromising the abrasive features of the solution.

By way of example, the liquid part will be preferably in an amount in weight higher than 70% of the powdered part and it will not be higher than 100% as on the contrary the abrasive properties of the composition will be excessively low.

Nevertheless, in particular the higher limit of the liquid part content, will be determined according to the specific use.

The abrasive composition could further contain an amount of inert fillers, such as silica, aluminium, cerium, zirconium oxides, corundum and silicon carbides and also calcium or magnesium carbonates in a suitable amount, i.e. in a ratio fillers/binder suitable for the successive use of the abrasive element, until it will be capable of increasing the productivity thereof according the above mentioned meaning.

### EXAMPLE

By way of example, a composition prepared according to the known art and two different compositions according to the present invention will be now compared.
a) Known composition
   1 part in weight of inert abrasive
   2 parts in weight of magnesium oxide and magnesium chloride solution mixture respectively formed by 100 parts in weight of MgO + 70 parts in weight of magnesium chloride solution having a density of 30°Be.
b) First example of composition according to the present invention
   1 part in weight of inert abrasive
   2 parts in weight of magnesium oxide and magnesium chloride solution mixture respectively formed by 100 parts in weight of MgO + 0.1% in weight of Bentone® LT and 80 parts in weight of magnesium chloride solution having a density of 30°Be.
c) Second example of composition according to the present invention
   1 part in weight of inert abrasive
   2 parts in weight of magnesium oxide and magnesium chloride solution mixture respectively formed by 100 parts in weight of MgO + 0.025% in weight of Starvis 3003 F and 90 parts in weight of magnesium chloride solution having a density of 30°Be.

Then, such compositions have been used for the manufacturing of grinding wheels by means of pouring them in a mould.

As clear, grinding wheels have the same abrasive capability, as they all comprise the same amount of abrasive aggregates and of magnesium oxide, nevertheless the higher amount of liquid part usable in the composition according to the present invention allows to obtain an higher number of castings and, accordingly, of grinding wheels.

In fact, the use of a higher amount of magnesium chloride solution, or of magnesium chloride/sulphate, with the same amount of magnesium oxide, offers a higher total volume of the composition which, together with the increased capability of receiving abrasive and/or inert fillers, the production of a higher number of pieces, in particular abrasive wheels that can be manufactured, the amount of raw materials used being the same. In general, it has been experimentally observed that the first example allowed to obtain a productivity increase of about 10% and the second of about 15%.

## Claims

1. An abrasive composition, suitable for the manufacturing of abrasive tools by casting of said composition in a mould, comprising inert abrasive and a powdered part mixed with a liquid part for allowing the casting of said composition in a mould, said liquid part being formed by a solution of magnesium chloride or of magnesium chloride/sulphate, said liquid part being in a amount in weight at least equal to 70% of said powdered part, and **characterized in that** said powdered part comprises:
• magnesium oxide in an amount comprised between about 99.0 % and 99.99 % of the total weight of said powdered part; and
• Rheological additives in a amount comprised between about
0.01 % and 1 % of the total weight of said powdered part;
said rheological additives belonging to the family of organically modified Hectorites and/or of poly-electrolyte synthetic co-polymers.

2. The composition according to claim 1, wherein said magnesium oxide has a reactivity, measured according to the method of International Activity by means of reaction with citric acid, longer than about 20 seconds and shorter than about 500 seconds.

3. The composition according to claim 2, wherein said reactivity is measured as the time in seconds required for said magnesium oxide to reacts with a specific medium strong acid solution, so that the solution pH value reaches the value at which a specific indicator, changes color

4. The composition according to claim 2 or 3, wherein said magnesium oxide has a granulometry such that the percentage of grains retained by a 106 µm sieve is lower than about 1%, and the percentage of grains retained by a 63 µm is lower than 16%.

5. The composition according to any of claims 2 to 4, wherein said magnesium oxide has an amount of MgO higher than about the 82% and lower than about the 92%, an amount of CaO lower than about the 2.5 %, and of various oxides R₂O₃ lower than about the 0.6%.

6. The composition according to any of the preceding claims, wherein said magnesium oxide has an insoluble residue lower than about the 10%.

7. The composition according to any of the preceding claims, wherein said magnesium oxide has a loss on ignition at 1000 °C lower than 3%.

8. The composition according to any of the preceding claims, wherein said magnesium oxide has a compacted specific weight lower than about 1.07 kg/l.

9. The composition according to any of the preceding claims, wherein said powdered part comprises one or more among the following elements:
silica oxides, aluminium oxides, cerium oxides, zirconium oxides, corundum, silicon carbides.

10. A method for the manufacturing of an abrasive tool, e.g. a grinding wheel, comprising a step of pouring in a mould an abrasive composition according to any of claims 1 to 9.

11. An abrasive tool **characterized in that** it comprises an abrasive composition according to any of claims 1 to 9.

12. A kit for the manufacturing of an abrasive composition comprising a first packaging containing a powdered part as described in any of claims 1 to 9 a second packaging containing a liquid part as described in any of claims 1 to 9 and instruction for mixing said powdered part and said liquid part so as to obtain the composition as described in any of claims 1 to 9.

## Patentansprüche

1. Abrasive Zusammensetzung, geeignet für die Herstellung von abrasiven Werkzeugen durch Gießen der Zusammensetzung in eine Gussform, umfassend ein inertes Abrasiv und einen puverförmigen Teil gemischt mit einem flüssigen Teil, um das Gießen der Zusammensetzung in die Gussform zu erlauben, wobei der flüssige Teil durch eine Magnesiumchlorid Lösung oder Magnesiumchlorid/sulfat gebildet ist, wobei der Gewichtsanteil des flüssigen Teils mindestens 70% bezogen auf den pulverförmigen Teil beträgt und **dadurch gekennzeichnet ist, dass** der pulverförmige Teil folgendes enthält:
° Magnesiumoxid in einer Menge zwischen etwa 99,0 % und 99,99 % bezogen auf das Gesamtgewicht des pulverförmigen Teils; und
° rheologische Additive in einer Menge zwischen etwa 0.01 % und 1 % bezogen auf das Gesamtgewicht des pulverförmigen Teils;
wobei die rheologischen Additive der Familie der organisch modifizierten Hectorite und/oder der Polyelektrolyt synthetischen Polymere angehören.

2. Zusammensetzung nach Anspruch 1, wobei das Magnesiumoxid eine Reaktivität von länger als etwa 20 Sekunden und kürzer als etwa 500 Sekunden, gemessen nach dem Verfahren der Internationalen Aktivität durch Reaktion mit Zitronensäure, beträgt.

3. Zusammensetzung nach Anspruch 2, wobei die Reaktivität gemessen wird als Zeit in Sekunden, die das Magnesiumoxid benötigt, um mit einem spezifischen Medium einer stark sauren Lösung zu reagieren, so dass der pH-Wert der Lösung einen solchen Wert erreicht, bei dem ein spezifischer Indikator die Farbe wechselt.

4. Zusammensetzung nach Anspruch 2 oder 3, wobei das Magnesiumoxid eine Granulometrie aufweist, so dass der Prozentanteil an Körnern, der durch ein 106 µm Sieb zurück behalten wird, geringer ist als etwa 1% und der Prozentanteil an Körnern, die durch ein 63 µm Sieb zurück behalten werden, geringer ist als 16%.

5. Zusammensetzung nach einem der Ansprüche 2 bis 4, wobei das Magnesiumoxid einen Anteil an MgO von mehr als etwa 82% und weniger als etwa 92%, einen Anteil an CaO von weniger als etwa 2,5% und einen Anteil an unterschiedlichen Oxiden R₂O₃ von weniger als etwa 0,6% aufweist.

6. Zusammensetzung nach einem der vorhergehenden Ansprüche, wobei das Magnesiumoxid weniger als etwa 10% unlösliche Rückstände aufweist.

7. Zusammensetzung nach einem der vorhergehenden Ansprüche, wobei das Magnesiumoxid einen Glühverlust bei 1000 °C von weniger als 3% aufweist.

8. Zusammensetzung nach einem der vorhergehenden Ansprüche, wobei das Magnesiumoxid ein verdichtetes spezifisches Gewicht von weniger als etwa 1,07 kg/l aufweist.

9. Zusammensetzung nach einem der vorhergehenden Ansprüche, wobei der pulverförmige Teil eines oder mehrere der folgenden Elemente enthält:
Siliziumoxide, Aluminiumoxide, Ceroxide, Zirkoniumoxide, Korund, Siliziumcarbide.

10. Verfahren zur Herstellung eines abrasiven Werkzeugs, z. B. einer Schleifscheibe, umfassend den Schritt des Gießens einer abrasiven Zusammensetzung nach einem der Ansprüche 1 bis 9 in eine Gussform.

11. Abrasives Werkzeug, **dadurch gekennzeichnet, dass** es eine abrasive Zusammensetzung nach einem der Ansprüche 1 bis 9 enthält.

12. Kit für die Herstellung einer abrasiven Zusammensetzung umfassend eine erste Packung, enthaltend einen pulverförmigen Teil, wie in einem der Ansprüche 1 bis 9 beschrieben, eine zweite Packung, enthaltend einen flüssigen Teil, wie in einem der Ansprüche 1 bis 9 beschrieben und Instruktionen zum Mischen des pulverförmigen Teils mit dem flüssigen Teil, so dass eine Zusammensetzung, wie in einem der Ansprüche 1 bis 9 beschrieben, erhalten wird.

## Revendications

1. Composition abrasive, appropriée pour la fabrication d'outils abrasifs par coulée de ladite composition dans un moule, comprenant un abrasif inerte et une partie pulvérulente mélangée avec une partie liquide pour permettre la coulée de ladite composition dans un moule, ladite partie liquide étant formée par une solution de chlorure de magnésium ou de chlorure/sulfate de magnésium, ladite partie liquide étant dans une quantité en masse au moins égale à 70 % de ladite partie pulvérulente, et **caractérisée en ce que** ladite partie pulvérulente comprend :
• de l'oxyde de magnésium dans une quantité entre environ 99,0 % et 99,99 % de la masse totale de ladite partie pulvérulente ; et
• des additifs rhéologiques dans une quantité entre environ 0,01 % et 1 % de la masse totale de ladite partie pulvérulente;
lesdits additifs rhéologiques appartenant à la famille d'hectorites organiquement modifiées et/ou de copolymères synthétiques de poly-électrolytes.

2. Composition selon la revendication 1, dans laquelle ledit oxyde de magnésium présente une réactivité, mesurée selon le procédé de International Activity au moyen d'une réaction avec de l'acide citrique, plus longue qu'environ 20 secondes et plus courte qu'environ 500 secondes.

3. Composition selon la revendication 2, dans laquelle ladite réactivité est mesurée comme le temps en secondes nécessaire pour que ledit oxyde de magnésium réagisse avec une solution d'acide moyen fort spécifique, de sorte que la valeur de pH de la solution atteigne la valeur à laquelle un indicateur spécifique change de couleur.

4. Composition selon la revendication 2 ou 3, dans laquelle ledit oxyde de magnésium présente une granulométrie telle que le pourcentage de grains retenus par un tamis de 106 µm est inférieur à environ 1 %, et le pourcentage de grains retenus par un 63 µm est inférieur à 16 %.

5. Composition selon l'une quelconque des revendications 2 à 4, dans laquelle ledit oxyde de magnésium présente une quantité de MgO supérieure à environ 82 % et inférieure à environ 92 %, une quantité de CaO inférieure à environ 2,5 %, et de différents oxydes R₂O₃ inférieure à environ 0,6 %.

6. Composition selon l'une quelconque des revendications précédentes, dans laquelle ledit oxyde de magnésium présente un résidu insoluble inférieur à environ 10 %.

7. Composition selon l'une quelconque des revendications précédentes, dans laquelle ledit oxyde de magnésium présente une perte lors d'une ignition à 1 000°C inférieure à 3 %.

8. Composition selon l'une quelconque des revendications précédentes, dans laquelle ledit oxyde de magnésium présente une masse spécifique tassée inférieure à environ 1,07 kg/1.

9. Composition selon l'une quelconque des revendications précédentes, dans laquelle ladite partie pulvérulente comprend un ou plusieurs parmi les éléments suivants :
des oxydes de silice, des oxydes d'aluminium, des oxydes de cérium, des oxydes de zirconium, du corindom, des carbures de silicium.

10. Procédé pour la fabrication d'un outil abrasif, par exemple une meule, comprenant une étape consistant à verser dans un moule une composition abrasive selon l'une quelconque des revendications 1 à 9.

11. Outil abrasif **caractérisé en ce qu'**il comprend une composition abrasive selon l'une quelconque des revendications 1 à 9.

12. Kit pour la fabrication d'une composition abrasive comprenant un premier emballage contenant une partie pulvérulente comme décrite dans l'une quelconque des revendications 1 à 9, un second emballage contenant une partie liquide comme décrite dans l'une quelconque des revendications 1 à 9 et une instruction pour le mélange de ladite partie pulvérulente et de ladite partie liquide afin d'obtenir la composition comme décrite dans l'une quelconque des revendications 1 à 9.
